(19) **Europäisches Patentamt**

**European Patent Office**

**Office européen des brevets**

(11) Numéro de publication : **0 479 642 A1**

## (12) DEMANDE DE BREVET EUROPEEN

(21) Numéro de dépôt : **91402531.7**

(22) Date de dépôt : **24.09.91**

(51) Int. Cl.⁵ : **B62D 1/10**

(30) Priorité : **04.10.90 FR 9012235**

(43) Date de publication de la demande :
**08.04.92 Bulletin 92/15**

(84) Etats contractants désignés :
**DE ES FR GB IT**

(71) Demandeur : **Bourgeois, Christiane, née Camecasse**
**49 Avenue Jean-baptiste Clément**
**F-92140 Clamart (FR)**
(71) Demandeur : **ECKENDORFF, Jean-Pierre**
**2, rue Sainte-Pierre La Neuville Claville**
**F-27180 Saint-Sébastien-de-Morsent (FR)**

(72) Inventeur : **Bourgeois, Christiane, née Camecasse**
**49 Avenue Jean-baptiste Clément**
**F-92140 Clamart (FR)**
Inventeur : **ECKENDORFF, Jean-Pierre**
**2, rue Sainte-Pierre La Neuville Claville**
**F-27180 Saint-Sébastien-de-Morsent (FR)**

(74) Mandataire : **CABINET BONNET-THIRION G. FOLDES**
**95 Boulevard Beaumarchais**
**F-75003 Paris (FR)**

(54) **Bague ou pièce annulaire perfectionnée du type à fente, un procédé pour son utilisation et ses applications.**

�Bague ou pièce annulaire perfectionnée (B) du type à fente caractérisée en ce que sa fente est simplement préparée sous la forme d'une zone de rupture (F) au fond d'une encoche (E).

Les applications d'une telle bague comprennent celles de clips, de joncs, de segments de vis ou de pièces d'assemblage et/ou de commande d'un élément mené et d'un élément menant.

EP 0 479 642 A1

**FIG.1**

La présente invention concerne une bague ou pièce annulaire perfectionnée du type à fente. De façon plus particulière l'invention concerne une bague ou pièce annulaire destinée à jouer le rôle de vis, clip, jonc segments ou autres, seule ou en coopération avec une autre pièce autour de, ou dans, laquelle elle se monte, pouvant en particulier constituer l'un des moyens d'un système d'assemblage d'un élément menant accouplé à un élément mené.

Ce type de bague entrant dans de telles applications consiste en général en un anneau simplement fendu, les deux bords de la fente réalisée pouvant s'écarter grâce à l'élasticité du matériau constitutif de cette bague de manière à pouvoir se monter sur un élément présentant un diamètre légèrement supérieur comportant, par exemple, une gorge dans laquelle elle se loge, jouant ainsi le rôle de clip, de jonc, de segment ou autre élément de montage et/ou d'étanchéité, voire d'élément d'assemblage ou de commande par exemple si cette bague est elle-même filetée extérieurement.

Or de telles bagues, bien que très utiles et efficaces, présentent un inconvénient non négligeable, à savoir qu'une fois venues de moulage, lors du dégrappage, des traitements de surface ou thermiques, de la manutention, elles ont tendance à s'enchevêtrer les unes dans les autres, justement par leurs fentes, pour former des grappes ou des chapelets, ce qui n'est pas pour faciliter leur utilisation ou leur distribution anneau par anneau et notamment pour l'alimentation des machines automatiques par bol vibrant ou tout autre système.

La présente invention se propose précisément de pallier cet inconvénient et couvre une bague ou pièce annulaire du type à fente caractérisée en ce que sa fente est simplement préparée avec une zone de rupture au fond d'une encoche.

Suivant d'autres caractéristiques :
– une bague telle que ci-dessus est avantageusement obtenue par moulage ;
– l'encoche est ménagée dans le sens de la longueur axiale de la pièce déterminant une ouverture sur une des faces latérales de celle-ci ;
– la pièce comporte un filetage sur sa surface radialement extérieure.

L'invention vise également un procédé d'utilisation d'une telle pièce.

La portée et l'intérêt de la présente invention ressortiront du reste plus clairement de la description qui va suivre, faite en regard des dessins annexés sur lesquels :
– La figure 1 est une vue en perspective d'une bague filetée selon l'invention et
– Les figures 2, 2A, 2B, 2C, illustrent un procédé d'utilisation possible d'une telle bague dans un système d'assemblage de deux pièces et leurs positions relatives en cours de montage.

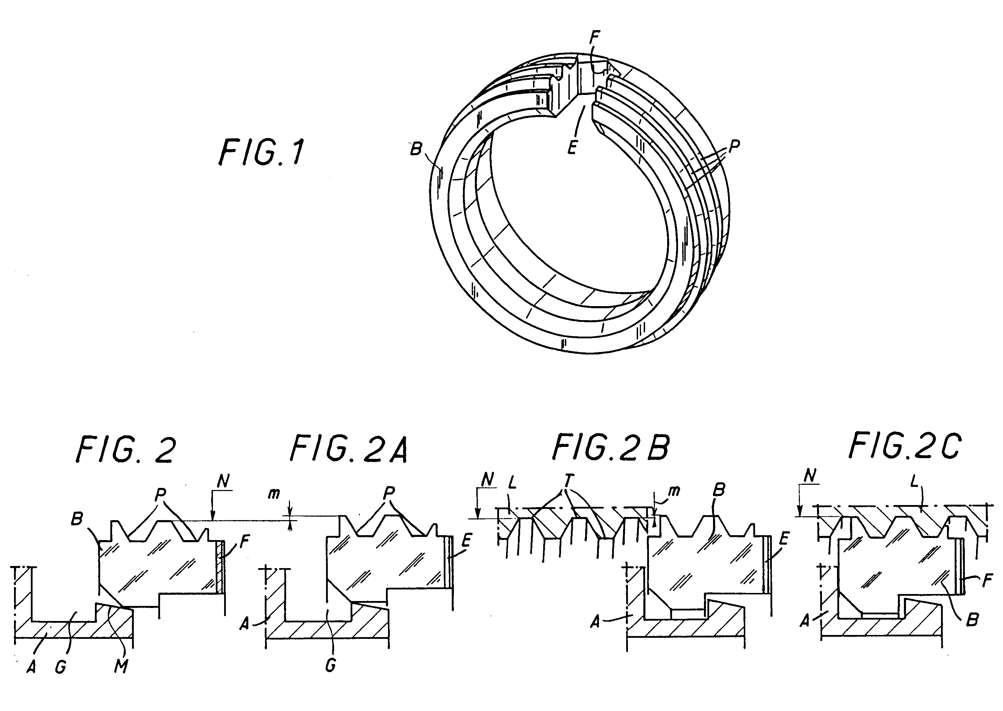

En se référant à ces dessins, la bague B selon l'invention illustrée à la figure 1, réalisée en tout matériau approprié rigide présentant une certaine élasticité, comporte à un endroit de son périmètre une encoche E réalisée de manière à laisser une épaisseur du matériau constitutif de cette bague suffisante pour conserver à cette dernière sa tenue mécanique, tout en constituant une zone, une ligne ou un point de rupture suivant que le fond F de cette encoche est une bande, une ligne ou un point de ce matériau. Comme exemple pratique, on citera celui d'une telle bague obtenue par moulage à partir d'un alliage léger connu sous le nom de "ZAMAC" présentant une hauteur de 5 mm, un diamètre extérieur de 25,8 mm, un diamètre intérieur de 24,1 mm, une encoche de 4 mm de large et de 4,7 mm de profondeur.

Suivant cette forme de réalisation et en vue, par exemple, de l'utilisation illustrée aux figures 2, 2A à 2C, la bague B comporte en P un filetage sur sa surface radialement extérieure (par exemple avec une profondeur de filet de 0,85 mm) pour coopérer par exemple avec le taraudage T d'une pièce L en vue de l'assemblage de cette dernière avec la pièce A.

On voit immédiatement à l'examen de ces figures 2, 2A à 2C, que pour que la bague B se loge dans la gorge G il a fallu l'engager à force sur l'épaulement M, ce qui s'est traduit par la rupture du fond de l'encoche F, d'une part, et par l'expansion, d'autre part, de la bague B. Cette expansion est illustrée sur les dessins par la cote "m". Le diamètre de la bague B une fois en place sera donc supérieur au diamètre initial de fabrication. En effet, l'expansion du matériau constitutif de la bague, au delà de la rupture laisse subsister une déformation permanente si bien que les lèvres de l'encoche dont le fond a été rompu ne seront plus jointives comme avant rupture. Il s'ensuit qu'au moment d'un vissage éventuel de la bague B dans le taraudage T, il se créera un couple exerçant une action de freinage dû à l'évasement de la bague tendant à rapprocher à nouveau lesdites lèvres, ce qui assure un serrage permettant de limiter le jeu des filets et les effets de vibration notamment dans le cas d'une pièce en mouvement. La figure 2B représente la bague B avant son vissage avec son diamètre supérieur (voir cote "m") et la figure 2C représente la même bague après vissage qui a retrouvé pratiquement son diamètre initial. La ligne N représente sur les dessins la cote du filetage correspondant au diamètre de la bague avant sa rupture ainsi que celle du taraudage de la pièce L. En comparant les figures 2, 2A, 2B et 2C, on se rend compte des différentes phases d'expansion et de resserrement que subit la bague B depuis son insertion dans la gorge G la solidarisant avec la pièce A jusqu'à son accouplement avec la pièce L.

Pour une opération "automatisée" on peut prévoir avant la présentation de la bague au droit de la pièce A, un mandrin conique (non représenté) disposé en amont de cette pièce A et de préférence coaxialement avec cette dernière, mandrin ayant son plus grand diamètre correspondant au diamètre que l'on désire obtenir après rupture du fond de l'encoche E de la bague B et correspondant à une déformation permanente prédéterminée. Ce diamètre correspond, bien entendu, au moins à celui permettant de franchir l'épaulement M (dans l'exemple ci-dessus) c'est-à-dire après une expansion correspondant à une augmentation du diamètre initial de la bague d'une valeur égale au moins à la valeur "m". Un tel mandrin, comme du reste l'épaulement M, sert ainsi de guide expanseur pour atteindre le degré de déformation voulue.

Un tel accouplement pourra avantageusement être adopté en utilisant une bague selon l'invention par exemple dans le système d'assemblage d'un élément menant et d'un élément mené faisant l'objet de la demande de brevet international n° 89/12179.

On voit immédiatement l'avantage de cet accouplement amélioré grâce aux bagues selon la présente invention.

Ces dernières présentent au surplus des avantages tels que de ne pas former de grappes de pièces au cours des traitements en vrac tels que traitement thermique, traitement de surface ; de faciliter une distribution automatique par exemple par bol vibrant ; de permettre un enlèvement par agitation des queues de coulée ; de permettre le contrôle métrologique des pièces fabriquées avant rupture de l'anneau au niveau de la zone sécable ainsi que d'autres avantages qui apparaîtront à l'homme de l'art et à l'utilisateur.

On peut noter notamment que la fente E, si elle n'est pas fermée par une partie sécable F, présente également un grave inconvénient dans le cas d'une bague avec filetage extérieur. L'outil de commande de ladite bague est muni d'ergots venant normalement s'emboîter dans les encoches destinées à les recevoir. Si la fente n'est pas fermée, un ergot de l'outil de commande risque d'accrocher cette fente et non les encoches. Il a alors tendance à ouvrir la bague qui n'engrène pas normalement dans le filetage et dans le cas d'assemblage notamment sur machine automatisée ces refus de vissage peuvent aller jusqu'à la destruction de la bague et excluent toute possibilité d'automatisation.

Par ailleurs, le fait que la bague soit fermée permet d'être sûr lors du montage, qu'elle est parfaitement à la cote et n'a subi aucune déformation, ce qui n'est pas le cas pour une pièce ouverte.

Comme indiqué précédemment, la bague selon l'invention pourra être réalisée en tout matériau approprié (métal, matière plastique, etc.) dont le choix sera fonction de l'utilisation finale envisagée (clips, joncs, bagues d'assemblage, segments, etc.). Au lieu de la technique de fabrication par moulage qui a été considérée à titre d'exemple, on peut envisager tout autre mode de fabrication : forgeage, matriçage, emboutissage, découpage, usinage, etc.

Il va du reste de soi que la présente invention n'a été décrite qu'à titre purement explicatif et nullement limitatif, et que toute modification utile au niveau des équivalences pourra y être apportée sans sortir de son cadre.

## Revendications

1) Bague ou pièce annulaire perfectionnée (B) du type à fente, caractérisée en ce que sa fente est simplement préparée avec une zone de rupture (F) au fond d'une encoche (E).

2) Bague ou pièce annulaire selon la revendication 1, caractérisée en ce qu'elle est obtenue par moulage.

3) Bague ou pièce annulaire selon la revendication 1 ou 2, caractérisée en ce que ladite encoche (E) est ménagée dans le sens de la longueur axiale de la pièce déterminant une ouverture sur une des faces latérales de celle-ci.

4) Bague ou pièce annulaire selon l'une des revendications 1 à 3, caractérisée en ce qu'elle comporte un filetage (P) sur sa surface radialement extérieure.

5) Bague ou pièce annulaire selon l'une quelconque des revendications 1 à 4, caractérisée en ce qu'elle est en tout matériau rigide présentant une certaine élasticité choisi parmi les métaux, matières synthétiques et analogues.

6) Un procédé d'utilisation d'une bague selon l'une quelconque des revendications 1 à 5, caractérisée en ce que sa mise en place s'effectue au moyen d'un guide expanseur de section progressivement croissante jusqu'à une valeur choisie de manière à conférer à cette bague, au delà de la rupture, une déformation (m) permanente prédéterminée de la pièce.

7) Applications d'une bague selon l'une quelconque des revendications 1 à 5 comportant celles de clips, de joncs, de segments de vis ou de pièces d'assemblage et/ou de commande d'un élément mené et d'un élément menant.

FIG.1

FIG.2   FIG.2A   FIG.2B   FIG.2C

Office européen
des brevets

**RAPPORT DE RECHERCHE EUROPEENNE**

Numero de la demande

EP   91 40 2531

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 016 529   (THE TORRINGTON COMPANY)<br>* page 2, lignes 21-35; page 4, ligne 28 - page 5, ligne 17; figure 1 *<br>--- | 1,5,6 | B 62 D   1/10 |
| D,A | WO-A-8 912 179  (ECKENDORF)<br>* revendications 4-7; figures 1,3 *<br>----- | 1,4,5 | |

**DOMAINES TECHNIQUES RECHERCHES (Int. Cl.5)**

B 62 D
F 16 C
F 16 D

Le présent rapport a été établi pour toutes les revendications

| Lieu de la recherche | Date d'achèvement de la recherche | Examinateur |
|---|---|---|
| BERLIN | 30-12-1991 | SCHAEFFLER C.A.A. |